# EUROPÄISCHE PATENTSCHRIFT

(11) **EP 3 748 254 B1**
(45) Veröffentlichungstag und Bekanntmachung des Hinweises auf die Patenterteilung: **03.11.2021**
(21) Anmeldenummer: 19178197.0
(22) Anmeldetag: 04.06.2019
(51) Int. Cl.: F24T 10/17

(54) **GEOTHERMIEWÄRMETAUSCHERANORDNUNG UMFASSEND WÄRMETAUSCHERSCHRAUBPFOSTEN**
GEOTHERMAL HEAT EXCHANGER ASSEMBLY COMPRISING HEAT EXCHANGER SCREW POSTS
DISPOSITIF D'ÉCHANGEUR DE CHALEUR GÉOTHERMIQUE COMPRENANT DES POTEAUX D'ÉCHANGEUR DE CHALEUR À VISSER

(43) Veröffentlichungstag der Anmeldung: 09.12.2020
(73) Patentinhaber: Häusler, Peter, 8008 Zürich (CH)
(72) Erfinder: Häusler, Peter, 8008 Zürich (CH)
(74) Vertreter: Hepp Wenger Ryffel AG

(56) Entgegenhaltungen:
- EP-A1- 3 118 558
- WO-A1-03/060389
- JP-A- 2007 139 370
- US-A- 5 339 890
- US-A1- 2010 200 192
- US-A1- 2015 316 294
- DATABASE WPI Section PQ, Week 201608 Thomson Scientific, London, GB; Class P73, AN 2016-04706B XP002796105, -& JP 2016 008663 A (GUNZE KK) 18. Januar 2016 (2016-01-18)

## Beschreibung

Die Erfindung betrifft eine Geothermiewärmetauscheranordnung gemäß Anspruch 1. Auf dem Bereich der Geothermie sind bereits Systeme zur Speicherung von Wärmeenergie im Erdreich sowie zur Wiedergewinnung der gespeicherten Wärmeenergie bekannt, welche nach dem Prinzip der Tiefenbohrung ausgebildet sind. Dabei wird meistens eine einzige Wärmesonde im Erdreich angeordnet. Nachteilig ist dabei, dass eine solche Anordnung sehr teuer ist, da das Erdreich zunächst etwa 200 m tief gebohrt werden muss und anschliessend eine entsprechend ausgebildete Wärmesonde platziert werden muss. Ein solches System wird daher nur bei grossen Neubauten eingesetzt. Eine andere Möglichkeit der Speicherung von Wärmeenergie besteht in der Anordnung eines gut isolierten Kessels in der Mitte eines Gebäudes. Nachteilig sind hier der enorme Platzbedarf sowie die Wärmestrahlung des Kessels, welche im Sommer sehr hoch sein kann.

US 2010/0200192 A1 offenbart eine Geothermiewärmetauscheranordnung gemäß dem Oberbegriff des Anspruchs 1.

Es ist daher Aufgabe der vorliegenden Erfindung, eine Möglichkeit bereitzustellen, welche die Nachteile des bekannten Stands der Technik nicht aufweist, die Nachrüstung von bestehenden Gebäuden mit einem Geothermiesystem ermöglicht und kostengünstig und einfach herstellbar und installierbar ist.

Die Aufgabe wird mit einer Geothermiewärmetauscheranordnung gemäß dem Anspruch 1 gelöst.

Der Wärmetauscherschraubpfosten umfasst einen hohlzylindrischen Grundkörper mit einem Hohlraum und einem geschlossenen Ende, wobei der Grundkörper an seiner Außenseite mit mindestens einem wendelförmigen Gewindeelement versehen ist. Es können auch eine Mehrzahl von Gewindeelementen vorgesehen sein, die voneinander beabstandet sein können. Bevorzugt weist das mindestens eine Gewindeelement über die gesamte Länge des Grundkörpers dieselbe Gewindesteigung auf.

Das mindestens eine wendelförmige Gewindeelement ist bevorzugt stoffschlüssig mit dem zylindrischen Grundkörper verbunden, so dass ein optimaler Wärmeaustausch zwischen Grundkörper und Gewindeelement möglich ist.

Das geschlossene Ende ist bevorzugt spitz ausgeführt. Damit wird die Möglichkeit geschaffen, dass der Wärmetauscherschraubpfosten auf einfache Art und Weise ins Erdreich eingebracht werden kann. An der dem geschlossenen Ende abgewandten Ende des Wärmetauscherschraubpfostens ist bevorzugt eine Aufnahme für ein Werkzeug vorgesehen, mit welchem der Wärmetauscherschraubpfosten ins Erdreich eingedreht werden kann.

Es ist somit nicht nötig, zum Einsetzen des Wärmetauscherschraubpfostens eine Vorbohrung vorzunehmen. Der Wärmetauscherschraubpfosten wird in das Erdreich eingeschraubt. Dabei verdrängt und verdichtet das mindestens eine Gewindeelement zusammen mit dem Grundkörper das Erdreich. Dadurch entsteht nicht nur der Vorschub zum Einsetzen sondern auch ein guter Kontakt zwischen Erdreich und Gewindeelement sowie Grundkörper.

Zudem erhöht das Gewindeelement die Austauschfläche des Wärmetauscherschraubpfostens mit der Erde.

Der Wärmetauscherschraubpfosten umfasst ferner ein koaxial zum Grundkörper und im Hohlraum des Grundkörpers angeordnetes Vorlaufrohr mit einem Aussendurchmesser. Das Vorlaufrohr erstreckt sich im Wesentlichen über eine gesamte axiale Länge des Grundkörpers.

Das Vorlaufrohr dient, je nach Funktion des Wärmetauscherschraubpfostens, als Zu- oder Ablauf für eine Flüssigkeit, welche als Wärmemedium eingesetzt wird. Bevorzugt wird als Wärmemedium Wasser verwendet. Es kann auch ein anderes flüssiges Wärmemedium verwendet werden, das auch noch bei tieferen Temperaturen Frostschutz aufweist.

Der Wärmetauscherschraubpfosten umfasst ferner eine koaxial zwischen dem Grundkörper und dem Vorlaufrohr angeordnete, durchgehende Isolierschicht mit einer axialen Bohrung mit einem Innendurchmesser, wobei der Innendurchmesser der Isolierschicht im Wesentlichen dem Aussendurchmesser des Vorlaufrohres entspricht, sodass die Isolierschicht an der Außenseite des Vorlaufrohrs anliegt, und die Isolierschicht sich im Wesentlichen über die gesamte axiale Länge des Grundkörpers erstreckt.

Dadurch wird erreicht, dass das Vorlaufrohr vom Rest des Wärmetauscherschraubpfostens isoliert wird, so dass Wärmeaustauschprozesse innerhalb des Wärmetauscherschraubpfostens zwischen Vor- und Rücklauf weitestgehend vermieden werden und der Wärmeaustausch hauptsächlich mit dem Erdreich stattfindet. Erfindungsgemäss wird zwischen dem Grundkörper und einer äusseren Umfangsfläche der Isolierschicht ein Ringspalt gebildet, welcher bevorzugt durch eine Mehrzahl von axial verlaufenden Rippen in eine Mehrzahl von Kanälen unterteilt ist.

Die Rippen können auch mit der radialen Richtung einen Winkeleinschliessen und/oder gekrümmt sein.

Durch die Rippen werden kleine Kanäle mit einem niedrigen hydraulischen Durchmesser gebildet, sodass eine laminare Strömung mit hohem Wärmeübergangswert erreicht werden kann. Der Wärmeaustausch wird begünstigt und der Vortrieb des Wärmemediums kann mit niederer Pumpenleistung erfolgen.

Die jeweils kleinen Durchflussmengen bei laminarer Strömung bewirken einen grossen Wärmeübertrag. Es kann daher entlang des Wärmetauscherschraubpfostens ein grosser Temperaturgradient erreicht werden.

Es ist dabei ersichtlich, dass Vorlaufrohr und Isolierschicht nicht bis zum Ende des Wärmetauscherschraubpfostens ausgebildet sind, da dort ein Übergang zwischen Vorlaufrohr und Ringspalt stattfinden soll und die Flüssigkeit vom Vorlaufrohr in den Ringspalt oder vom Ringspalt in das Vorlaufrohr fliessen soll.

Der Wärmetauscherschraubpfosten weist bevorzugt einen Aussendurchmesser zwischen 15 und 25 cm auf.

Das Vorlaufrohr weist bevorzugt einen Durchmesser zwischen 1 und 4 cm auf.

Der Grundkörper weist bevorzugt einen Durchmesser zwischen 8 und 13 cm auf.

Solche bevorzugten Abmessungen erlauben das Führen einer ausreichenden Menge des Wärmemediums, einen leichten Transportieren und eine einfache Montage. Sie sind daher bei der Ausbildung eines Wärmetauscherschraubpfostens zur Anordnung unterhalb von bereits bestehenden Gebäuden besonders vorteilhaft.

Grundkörper, Vorlaufrohr und Isolierschicht werden bevorzugt separat gefertigt und dann zur Ausbildung eines Wärmetauscherschraubpfostens ineinander gesteckt. Dies kann auch beim Eindrehen erfolgen, so dass beispielsweise der Grundkörper zunächst ins Erdreich eingedreht wird und anschliessend Vorlaufrohr und Isolierschicht hineingesteckt werden.

Der Grundkörper und das Gewindeelement sind bevorzugt aus verzinktem Metall gefertigt.

Dabei wird sichergestellt, dass der Wärmetauscherschraubpfosten auch im Erdreich über eine gute Lebensdauer verfügt und insbesondere korrosionsbeständig ist.

Bevorzugt sind nach innen weisende, zum Beispiel axial verlaufende, Rippen an einer Innenseite des Grundkörpers ausgebildet.

Dadurch wird eine einfache Möglichkeit geschaffen, die Rippen auszubilden, da diese z.B. beim Strangpressen ausgebildet werden können.

Alternativ können nach aussen weisende, zum Beispiel axial verlaufende, Rippen an der äusseren Umfangsfläche der Isolierschicht ausgebildet sein.

In einem solchen Fall können die Rippen noch einfacher ausgebildet werden, da die Isolierschicht bevorzugt aus einem Kunststoff ausgebildet ist und die Rippen mit der Isolierschicht einstückig, bspw. durch Extrusion, erzeugt werden können.

Das Vorlaufrohr ist dabei bevorzugt aus Kunststoff.

Die Isolierschicht weist bevorzugt einen Wärmedurchgangskoeffizient zwischen 0,15 und 0,35 W/(m² K) auf.

Materialien mit einem solchen Wärmedurchgangskoeffizienten sind hinreichend bekannt und können einfach und kostengünstig hergestellt werden, insbesondere wenn die Rippen einstückig mit der Isolierschicht ausgebildet sind.

Der Wärmetauscherschraubpfosten weist bevorzugt eine Länge zwischen 3 und 12 m auf, weiter bevorzugt grösser 5m.

Eine solche Länge hat sich als hinreichend für die später beschriebene Anwendung von mehreren Wärmetauscherschraubpfosten gezeigt.

Es ist dabei zu vermerken, dass der Wärmetauscherschraubpfosten nicht unbedingt als ganzes die bevorzugte Länge aufweisen muss. Insbesondere wenn der Wärmetauscherschraubpfosten unterhalb von bestehenden Gebäuden angeordnet werden muss, sind hinsichtlich der Länge Grenzen gesetzt, welche durch die Höhe der (Keller-) Räume bestimmt werden. Dabei ist der Wärmetauscherschraubpfosten bevorzugt aus einer Mehrzahl von Elementen zusammengesetzt, welche in axialer Richtung der Elemente aneinander verbunden, vorzugsweise verschraubt, werden.

Die einzelnen Elemente sind dabei bevorzugt zwischen 1,5 und 2,5 m lang, so dass diese problemlos auch in niedrigen Räumlichkeiten aufgerichtet und ins Erdreich eingedreht werden können. Die Gesamtlänge wird dann durch die Verbindung von mehreren Elementen miteinander erreicht.

Der Wärmetauscherschraubpfosten ist so ausgeführt, dass er mit mindestens einem weiteren Wärmetauscherschraubpfosten fluidtechnisch verbindbar ist.

Der Wärmetauscherschraubpfosten weist an einem Ende bevorzugt einen Anschlussstutzen auf, der fluidtechnisch mit dem Vorlaufrohr verbunden ist, und einen Anschlussstutzen auf, der fluidtechnisch mit dem Ringspalt verbunden ist.

Die Erfindung betrifft eine Geothermiewärmetauscheranordnung umfassend eine Mehrzahl von Wärmetauscherschraubpfosten wie vorstehend beschrieben, welche im Erdreich angeordnet sind.

Die Wärmetauscherschraubpfosten dienen zum einen dem Wärmeaustausch mit dem Erdreich, können zum andern aber auch eine statische Funktion übernehmen zum Verankern eines Gebäudes am Untergrund.

Die Wärmetauscherschraubpfosten der Geothermiewärmetauscheranordnung können auch Teil einer Gebäudeunterkonstruktion sein, zu der ausser den Wärmetauscherschraubpfosten noch weitere Schraubpfosten gehören.

Die Geothermiewärmetauscheranordnung umfasst bevorzugt ein Gebäude, wobei die Wärmetauscherschraubpfosten unterhalb des Gebäudes im Erdreich angeordnet sind.

Das Gebäude schirmt die Geothermiewärmetauscheranordnung nach oben gegen Temperaturaustausch ab. Zu dem Gebäude kann ausser dem Aufbau eine Grundplatte gehören, von welcher der Aufbau nur eine Teilfläche einnimmt. Die Grundplatte dient ebenfalls der Wärmeabschirmung.

Das Gebäude nimmt in der kalten Jahreszeit die von der Geothermiewärmetauscheranordnung gelieferte Wärme an und gibt seinerseits in der warmen Jahreszeit Wärme an die Geothermiewärmetauscheranordnung ab. Das Gebäude kann ausserdem Sonnenkollektoren umfassen, deren Wärme ebenfalls an die Geothermiewärmetauscheranordnung geleitet werden kann.

Die Geothermiewärmetauscheranordnung umfasst bevorzugt mindestens eine Pumpe zum Leiten des Wärmemediums und/oder eine Wärmepumpe.

Erfindungsgemäß sind wenigstens zwei Wärmetauscherschraubpfosten parallel miteinander verschaltet zur Bildung eines Speicherkreises.

Erfindungsgemäß weist die Geothermiewärmetauscheranordnung mehrere Speicherkreise auf, welche jeweils aus mehreren parallel verschalteten Wärmetauscherschraubpfosten bestehen, wobei die Speicherkreise seriell miteinander verschaltet und konzentrisch zueinander angeordnet sind. Es ist zu vermerken, dass konzentrisch im Sinne der vorliegenden Erfindung bedeutet, dass die Speicherkreise nach einem "Zwiebelschalenprinzip" angeordnet sind. Der innere Speicherkreis befindet sich bevorzugt bezüglich eines Grundrisses des Gebäudes am weitesten entfernt von den Aussenmauern. Die jeweiligen Speicherkreise weisen dabei in etwa gleiche Temperaturverhältnisse auf, wobei der innerste Kreis die höchste Temperatur aufweist. Somit wird ein Wärmekern im Erdreich erzeugt.

Die Temperatur nimmt für jeden Speicherkreis entlang der Wärmetauscherschraubpfosten nach unten hin zu. Im Idealfall hat ein innerer Speicherkreis im oberen Bereich der Wärmetauscherschraubpfosten die gleiche Temperatur, wie der nächst äussere Speicherkreis im unteren Bereich.

Die Temperaturunterschiede in den jeweiligen Speicherkreisen addieren sich über alle Speicherkreise und ergeben in Summe den Temperaturunterschied zwischen dem Kern und dem Aussenbereich der gesamten Geothermiewärmetauscheranordnung.

Die konzentrische Anordnung der Speicherkreise bewirkt somit, dass innerhalb der Anordnung eine hohe Temperatur und entsprechend ein grosser Temperaturunterschied zum umgebenden Erdreich erreicht werden kann. Gleichzeitig bewirkt das "Zwiebelschalenprinzip" eine Temperaturabschirmung, sodass die seitlichen Wärmeverluste gering gehalten werden.

Ein Speicherkreis muss hierbei nicht geometrisch kreisförmig sein, sondern kann auch andere Formen wie beispielsweise rechteckig oder ähnliches haben.

Bevorzugt umfasst die Geothermiewärmetauscheranordnung eine Schaltanordnung, mit welcher die Speicherkreise gekoppelt und entkoppelt werden können, sodass die Speicherkreise separat, in Untergruppen oder als Gesamtsystem betrieben werden können.

Die Schaltanordnung kann Bestandteil einer Regelanordnung sein, die mit Temperaturfühlern in den Speicherkreisen ausgestattet ist, und über welche situationsbedingt die optimale Verschaltung der Speicherkreise einstellbar ist.

Als Wärmespeicher wirkt neben den Wärmetauscherschraubpfosten der Geothermiewärmetauscheranordnung auch das Erdreich, das diese umgibt.

Somit kann sogar erreicht werden, dass über längere Zeit die Temperatur im Wärmekern, also auch im dem die Geothermiewärmetauscheranordnung umgebenden Erdreich, erhöht wird (d. h. dass die Wärmemenge, die während der warmen Saison ins Erdreich gespeichert wird, höher ist als die Wärmemenge, die während der kalten Saison dem Erdreich entnommen wird).

Bevorzugt wirken die Speicherkreise zusammen mit einer Wärmepumpe. Die Wärmepumpe kann das Heizen unterstützen.

Indem die Wärmepumpe den äussersten Speicherkreis als Quelle benutzt, kann dieser im Bereich der natürlichen Erdtemperatur gehalten werden. Damit werden ein Wärmeabfluss nach aussen und damit seitliche Wärmeverluste vermieden. Die Wärmepumpe wirkt so dem natürlichen Wärmeverlustfluss entgegen, welcher für eine Abkühlung der Geothermiewärmetauscheranordnung sorgen würde.

Sukzessive kann auch den inneren Speicherkreisen Wärme entzogen werden.

Beim Kühlen kann Wärme an den äussersten Speicherkreis abgegeben werden. Die Wärmepumpe kann das Abgeben von Gebäudewärme an die Geothermiewärmetauscheranordnung unterstützen.

Da die Geothermiewärmetauscheranordnung durch Gebäudewärme oder zum Beispiel aus einem Sonnenkollektor, aufgeladen werden kann und diese Wärme durch den konzentrischen Aufbau verlustarm speichern kann, kann die Geothermiewärmetauscheranordnung zusammen mit einer Wärmepumpe als autonomes Heizsystem wirken.

Die Erfindung wird nachfolgend anhand von bevorzugten Ausführungsbeispielen in Verbindung mit den Figuren besser beschrieben. Es zeigen:
Fig. 1 eine Schnittansicht durch einen Wärmetauscherschraubpfosten einer erfindungsgemäßen Geothermiewärmetauscheranordnung;
Fig. 2 eine schematische Draufsicht auf eine erfindungsgemäße Geothermiewärmetauscheranordnung;
Fig. 3 eine schematische, perspektivische Ansicht der Geothermiewärmespeicheranordnung der Figur 2 mit Gebäude;
Fig. 4 eine schematische Detailansicht eines Wärmetauscherschraubpfostens in einem seitlichen Schnittbild;
Fig. 5 eine weitere schematische Detailansicht eines Wärmetauscherschraubpfostens in einem seitlichen Schnittbild;
Fig. 6 eine perspektivische Detailansicht eines Wärmetauscherschraubpfostens.

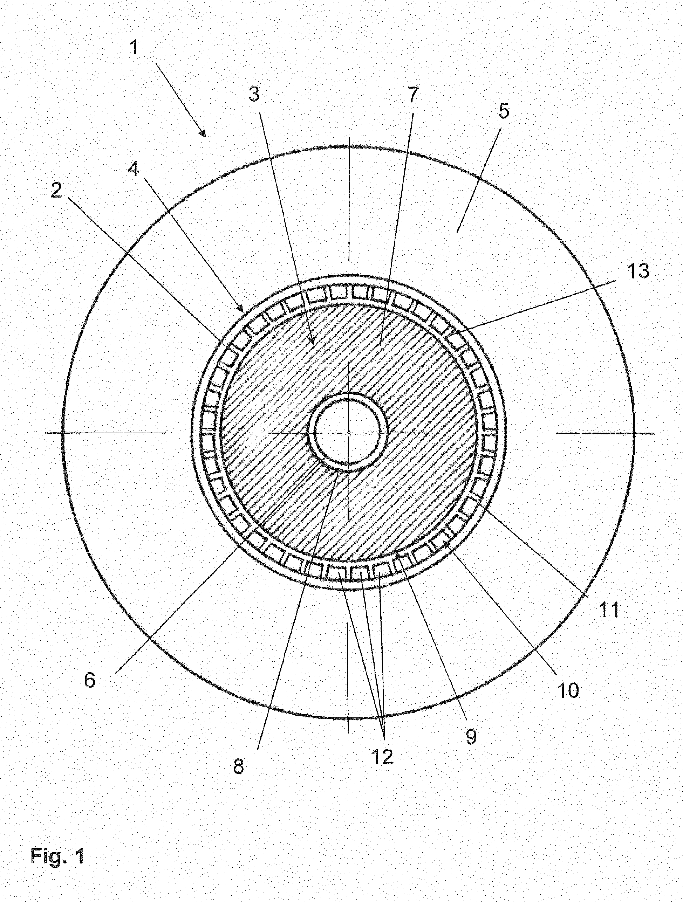

In der Figur 1 ist ein Wärmetauscherschraubpfosten 1 schematisch in Schnittansicht gezeigt, welcher einen hohlzylindrischen Grundkörper 2 mit einem Hohlraum 3 aufweist. An einer Außenseite 4 des Grundkörpers 2 ist ein Gewinde in der Form eines wendelförmigen Gewindeblechs 5 angebracht.

In dem Hohlraum 3 sind konzentrisch zueinander eine Isolierschicht 7 und ein Vorlaufrohr 6 angeordnet. Das Vorlaufrohr 6 ist in einer axialen Bohrung 8 der Isolierschicht 7 eingeschoben.

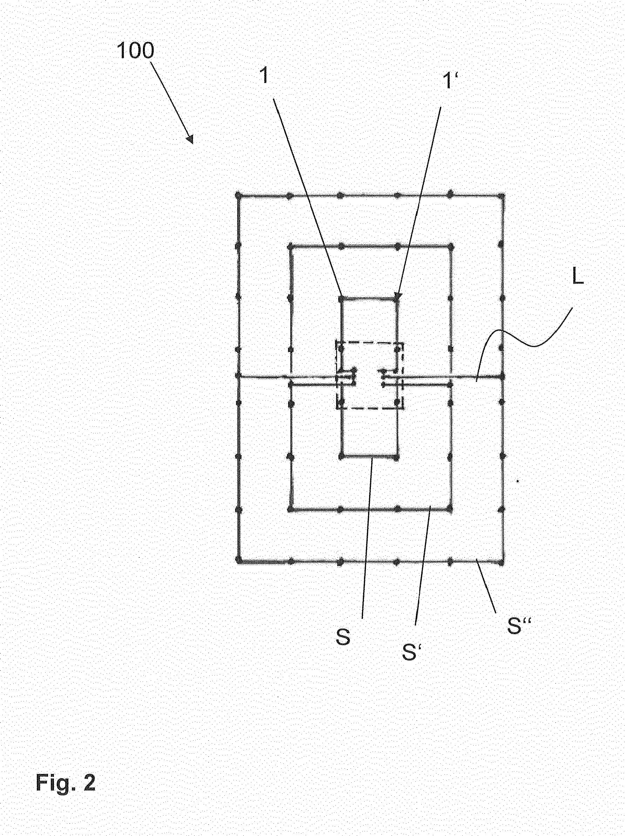

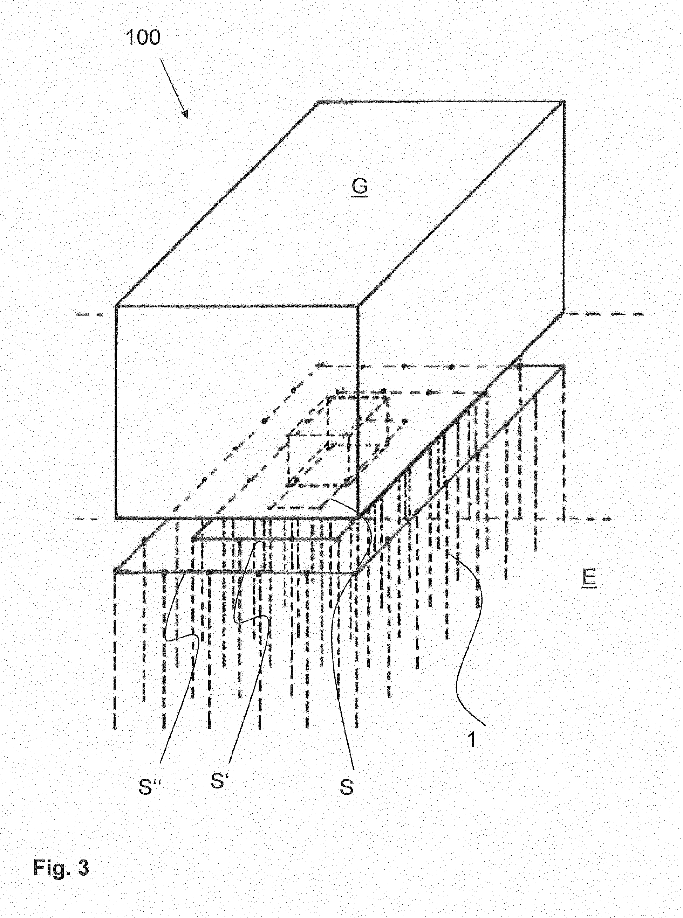

Die Isolierschicht 7 ist dabei vom Grundkörper 2 beabstandet angeordnet, so dass ein Ringspalt, schematisch durch den Pfeil 10 angedeutet, zwischen dem Grundkörper 2 und der Isolierschicht 7 entsteht. Ein Abstandselement 13 mit einer Mehrzahl von Rippen 11, von denen der Übersicht halber nur eine mit einem Bezugszeichen versehen ist, ist um die Isolierschicht 7 angeordnet. Die Rippen 11 grenzen eine Mehrzahl von Kanälen 12 ein, von denen ebenfalls nur einer mit einem Bezugszeichen versehen ist. Die Kanäle 12 weisen einen sehr niedrigen hydraulischen Querschnitt auf, so dass die Pumpenleistung zum Betreiben des Wärmetauscherschraubpfosten 1 entsprechend niedrig ausgelegt werden kann. Zudem sind die Strömungsverhältnisse besser vorhersagbar. Wärmetauscherschraubpfosten 1 finden bei erfindungsgemäßen Geothermiewärmetauscheranordnungen 100 Anwendung, welche in den Figuren 2 und 3 schematisch dargestellt sind.

Die Wärmetauscherschraubpfosten 1, 1' werden dabei unterhalb eines Gebäudes G ins Erdreich E eingedreht. Dies kann auch bei bereits bestehenden Gebäuden der Fall sein. Dabei ist es lediglich notwendig, dass kleine Öffnungen im untersten Geschoss des Gebäudes G offengelegt werden, wo dann die Wärmetauscherschraubpfosten 1, 1' usw. eingedreht werden können.

Erfindungsgemäss werden die Wärmetauscherschraubpfosten 1, 1' so miteinander verbunden, dass mehrere Speicherkreise S, S' und S" entstehen, wobei die Wärmetauscherschraubpfosten 1, 1' innerhalb eines Speicherkreises S, S', S" parallel miteinander verschaltet sind, sodass jeweils innerhalb eines Kreises, in den Wärmetauscherschraubpfosten und in dem unmittelbar daran anschliessenden Erdreich, in etwa gleiche Temperaturverhältnisse vorliegen. Die Speicherkreise sind ausserdem miteinander durch Leitungen L seriell verschaltet.

Der innerste Speicherkreis S wird von den anderen Speicherkreisen S' und S" umgeben. Es entsteht dabei eine Anordnung nach dem "Zwiebelschalenprinzip".

Der innerste Speicherkreis S kann zunächst mit Wärmemedium, z.B. Wasser aus Sonnenkollektoren oder mit erwärmtem Wärmemedium aus dem Gebäudeinneren, durchströmt werden. Der Wärmetransfer kann durch eine nicht in der Figur dargestellte Wärmepumpe begünstigt werden.

Wärme wird ins Erdreich E abgegeben, wobei sukzessiv die Wärmetauscherschraubpfosten der weiteren Speicherkreise S' und S durchströmt werden. Damit wird die Abgabeleistung der Geothermiewärmetauscheranordnung 100 verbessert.

Die äusseren Speicherkreise S' und S" bewirken zudem, dass der innere Speicherkreis S vor übermässiger Abkühlung geschützt ist.

Es kann somit im optimalen Bereich unterhalb des Gebäudes G, welcher nach oben hin durch das Gebäude G selbst geschützt ist, Wärme gespeichert werden.

Umgekehrt kann dann, wenn Wärme dem Erdreich E entzogen werden muss, die Geothermiewärmetauscheranordnung 100 so betrieben werden, dass die Wärme hauptsächlich dem äusseren Speicherkreis S" zunächst entzogen wird, um z.B. eine Heizung während der kalten Saison zu betreiben.

Eine nicht in der Figur dargestellte Wärmepumpe unterstützt die Wärmeabgabe an das Gebäude und gegebenenfalls an die inneren Speicherkreise S, S'.

Die Wärmepumpe benützt die äusseren Speicherkreise S" als Quelle (d.h. diese werden gekühlt) und heizt Gebäude oder Warmwasser.

Im Sommer entzieht die Wärmepumpe dem Gebäude Wärme und sorgt für ein Aufheizen insbesondere der inneren Speicherkreise S, S'.

Wenn die in der Geothermiewärmetauscheranordnung 100 vorhandenen Temperaturen dies zulassen, kann auch "direkt", also ohne Wärmepumpe, geheizt oder gekühlt werden.

Die Speicherkreise können auch so mit einer Wärmepumpe verschaltet sein, dass zeitweise sogar gleichzeitig auf den äusseren Kreis gekühlt und auf den inneren Kreis geheizt wird.

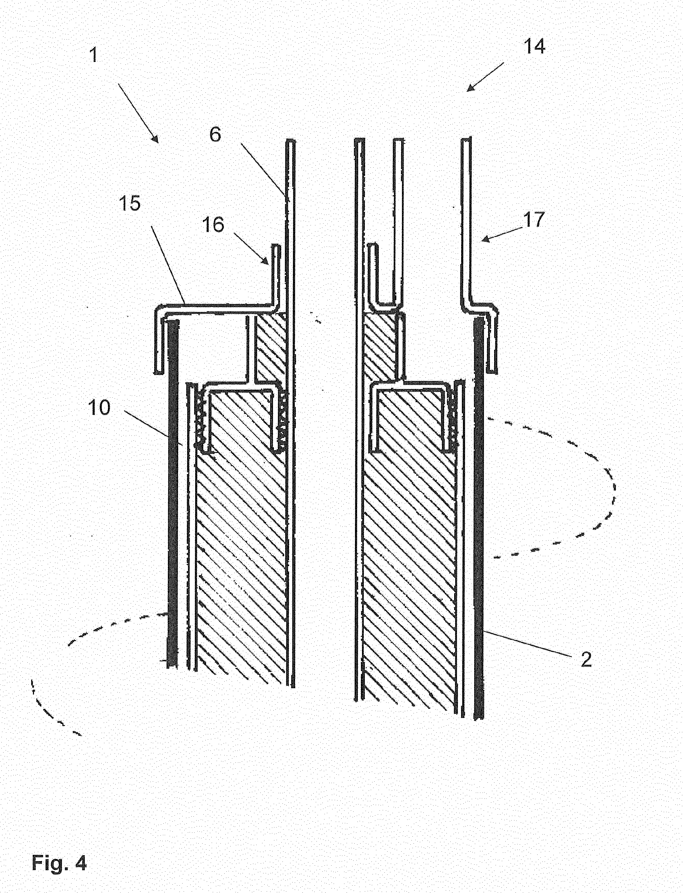

Figur 4 zeigte eine schematische Detailansicht eines Wärmetauscherschraubpfostens 1 in einem seitlichen Schnittbild. Die Figur zeigt die obere Anschlussstelle 14 des Wärmetauscherschraubpfostens 1.

Das Vorlaufrohr 6 ist an der oberen Anschlussstelle 14 aus dem Grundkörper 2 und aus einen Deckelement 15 herausgeführt und bildet damit einen Anschlussstutzen für das Wärmemedium. Das Deckelelement 15 deckt den Grundkörper 2 ab und kann beispielsweise auf den Grundkörper 2 aufgeschraubt werden.

Das Deckelelement 15 bietet einen Durchlass 16 für das Vorlaufrohr 6 und eine Durchlassöffnung 17, welche in Fluidverbindung mit dem Ringspalt 10 steht.

Alternativ kann das Deckelelement auch einen (in der Figur nicht gezeigten) Anschlussstutzen aufweisen, der in Fluidverbindung mit dem Vorlaufrohr 6 steht. Die Fluidverbindung kann beim Aufschrauben des Deckelelements 15 erstellt werden.

In jedem Fall bietet das Deckelelement 15 Anschlüsse für nicht gezeigte Ventile oder Leitungen, über welche der Wärmetauscherschraubpfosten 1 mit weiteren Wärmetauscherschraubpfosten, mit einer Pumpe, mit einer Wärmepumpe, mit einem Speicher für Wärmemedium oder mit einem gebäudeseitigen Kreislauf für eine Wärmemedium verbunden werden kann.

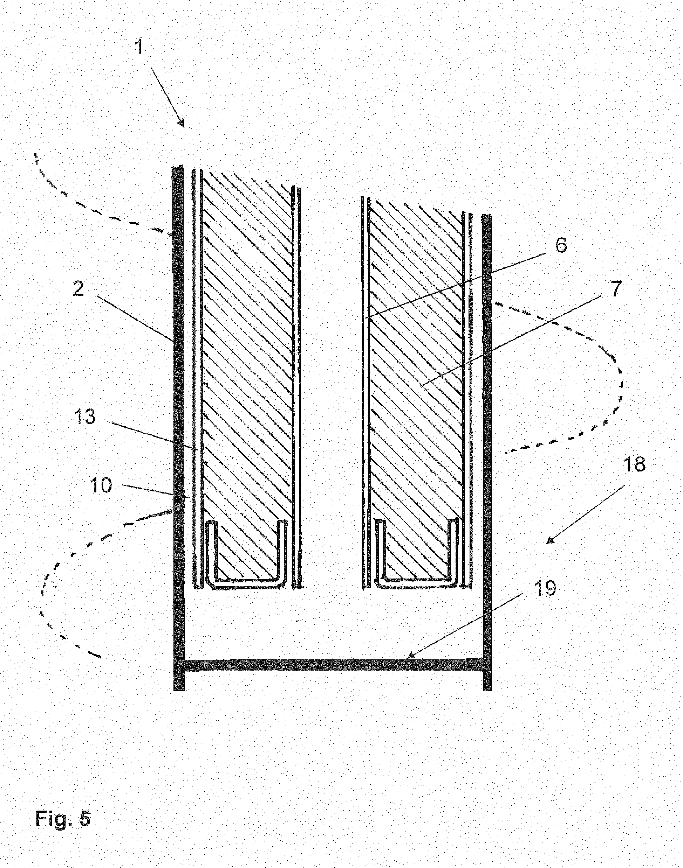

Figur 5 zeigt eine weitere schematische Detailansicht eines Wärmetauscherschraubpfostens 1 in einem seitlichen Schnittbild. Die Figur zeigt den Sondenfuss 18 des Wärmetauscherschraubpfostens 1.

Vorlaufrohr 6, Isolationsschicht 7 und das Abstandelement 13 sind nicht bis zum geschlossenen Boden 19 des Grundkörpers 2 geführt, sodass eine Fluidverbindung zwischen dem Ringspalt 10 und den Inneren des Vorlaufrohres 6 besteht.

Unterhalb des geschlossenen Bodens 19 kann der Grundkörper 2 eine nicht explizit gezeigte Spitze aufweisen, die das Einführen des Wärmetauscherschraubpfostens 1 in das Erdreich erleichtert.

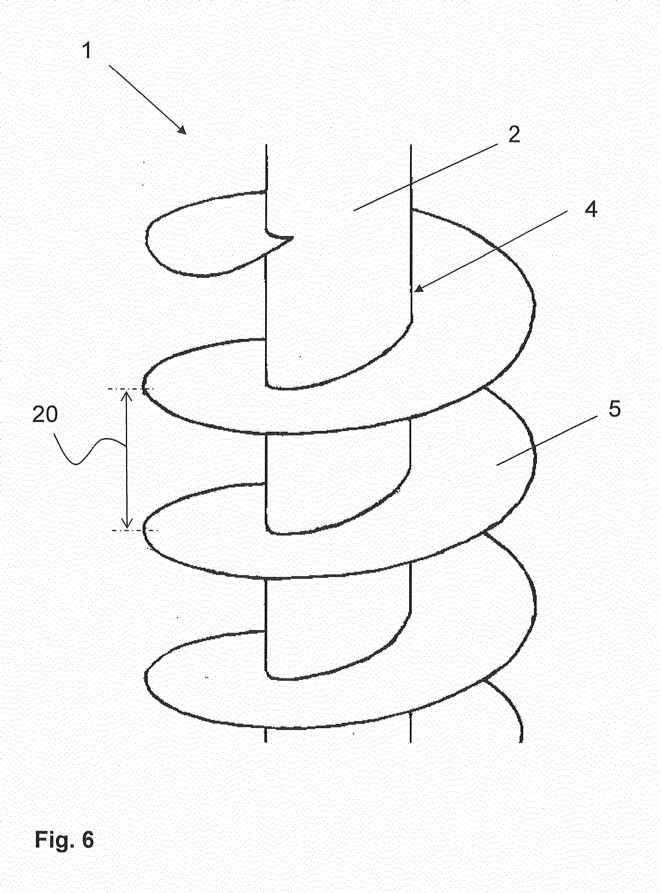

Figur 6 zeigt eine perspektivische Detailansicht eines Wärmetauscherschraubpfostens 1. An der Außenseite 4 eines zylindrischen Grundkörpers 2 ist ein wendelförmiges Gewindeelement 5 vorgesehen.

Die Gewindesteigung 20 liegt bevorzugt zwischen 5cm und 15cm.

## Patentansprüche

1. Geothermiewärmetauscheranordnung umfassend:
eine Mehrzahl von Wärmetauscherschraubpfosten (1, 1'), welche im Erdreich (E) angeordnet sind, wobei jeder Wärmetauscherschraubpfosten (1) umfasst
- einen hohlzylindrischen Grundkörper (2) mit einem Hohlraum (3) und einem geschlossenen Ende, wobei der Grundkörper (2) an seiner Außenseite (4) mit mindestens einem wendelförmigen Gewindeelement (5) versehen ist;
- ein koaxial zum Grundkörper (2) und im Hohlraum (3) des Grundkörpers (2) angeordnetes Vorlaufrohr (6) mit einem Aussendurchmesser, welches sich im Wesentlichen über eine gesamte axiale Länge des Grundkörpers (2) erstreckt;
**dadurch gekennzeichnet, dass**
jeder Wärmetauscherschraubpfosten (1) zusätzlich umfasst:
- eine koaxial zwischen dem Grundkörper (2) und dem Vorlaufrohr (6) angeordnete, durchgehende Isolierschicht (7) mit einer axialen Bohrung (8) mit einem Innendurchmesser, wobei der Innendurchmesser der Isolierschicht (7) im Wesentlichen dem Aussendurchmesser des Vorlaufrohres (6) entspricht und die Isolierschicht (7) sich im Wesentlichen über die gesamte axiale Länge des Grundkörpers (2) erstreckt;
- wobei zwischen dem Grundkörper (2) und einer äusseren Umfangsfläche (9) der Isolierschicht (2) ein Ringspalt (10) gebildet wird, welcher bevorzugt durch eine Mehrzahl von axial verlaufenden Rippen (11) in eine Mehrzahl von Kanälen (12) unterteilt ist, und dass wenigstens zwei Wärmetauscherschraubpfosten (1, 1') parallel miteinander verschaltet sind zur Bildung eines Speicherkreises (S), wobei die Geothermiewärmetauscheranordnung (100) mehrere Speicherkreise (S, S') aufweist, welche jeweils aus mehreren zueinander parallel verschalteten Wärmetauscherschraubpfosten (1, 1') bestehen, wobei die Speicherkreise (S, S') seriell miteinander verschaltet und konzentrisch zueinander angeordnet sind.

2. Geothermiewärmetauscheranordnung nach Anspruch 1, wobei jeder Wärmetauscherschraubpfosten (1) einen Aussendurchmesser zwischen 15 und 25 cm aufweist.

3. Geothermiewärmetauscheranordnung nach Anspruch 1 oder 2, wobei jedes Vorlaufrohr (6) einen Durchmesser zwischen 1 und 4 cm aufweist.

4. Geothermiewärmetauscheranordnung nach einem der vorhergehenden Ansprüche, wobei jeder Grundkörper (2) einen Durchmesser zwischen 8 und 13 cm aufweist.

5. Geothermiewärmetauscheranordnung nach einem der vorhergehenden Ansprüche, wobei jeder Grundkörper (2) und das Gewindeelement (5) aus verzinktem Metall gefertigt sind.

6. Geothermiewärmetauscheranordnung nach einem der vorhergehenden Ansprüche, wobei nach innen weisende, bevorzugt axial verlaufende, Rippen (11) an einer Innenseite jedes Grundkörpers (2) ausgebildet sind.

7. Geothermiewärmetauscheranordnung nach einem der Ansprüche 1 bis 5, wobei nach aussen weisende, bevorzugt axial verlaufende, Rippen (11) an der äusseren Umfangsfläche (9) jeder Isolierschicht (7) ausgebildet sind.

8. Geothermiewärmetauscheranordnung nach einem der vorhergehenden Ansprüche, wobei jedes Vorlaufrohr (6) aus Kunststoff ist.

9. Geothermiewärmetauscheranordnung nach einem der vorhergehenden Ansprüche, wobei jede Isolierschicht (7) einen Wärmedurchgangskoeffizient zwischen 0,15 und 0,35 W/(m² • K) aufweist.

10. Geothermiewärmetauscheranordnung nach einem der vorhergehenden Ansprüche wobei jeder Wärmetauscherschraubpfosten (1) eine Länge zwischen 3 und 12 m aufweist.

11. Geothermiewärmetauscheranordnung nach einem der vorhergehenden Ansprüche, wobei jeder Wärmetauscherschraubpfosten (1) aus einer Mehrzahl von Elementen zusammengesetzt ist, welche in axialer Richtung der Elemente aneinander verbunden, vorzugsweise verschraubt, werden.

12. Geothermiewärmetauscheranordnung nach einem der vorhergehenden Ansprüche, wobei die Geothermiewärmetauscheranordnung (100) ein Gebäude (G) umfasst und wobei die Wärmetauscherschraubpfosten (1, 1') unterhalb des Gebäudes (G) im Erdreich (E) angeordnet sind.

## Claims

1. Geothermal heat exchanger assembly comprising:
a plurality of heat exchanger screw posts (1, 1') arranged in the ground (E), wherein each heat exchanger threaded post (1) comprises
- a hollow cylindrical base body (2) with a cavity (3) and a closed end, the base body (2) being provided on its outer side (4) with at least one helical threaded element (5)
- a supply pipe (6) arranged coaxially with respect to the base body (2) and in the cavity (3) of the base body (2), the supply pipe (6) having an outside diameter and extending substantially over an entire axial length of the base body (2)
**characterized in that**
each heat exchanger screw post (1) additionally comprises:
- a continuous insulating layer (7) arranged coaxially between the base body (2) and the supply pipe (6) and having an axial bore (8) with an inner diameter, the inner diameter of the insulating layer (7) corresponding substantially to the outer diameter of the supply pipe (6), and the insulating layer (7) extending substantially over the entire axial length of the base body (2);
- wherein an annular gap (10) is formed between the base body (2) and an outer circumferential surface (9) of the insulating layer (2), which annular gap (10) is preferably divided into a plurality of channels (12) by a plurality of axially extending ribs (11),
and **in that**
at least two heat exchanger screw posts (1, 1') are connected in parallel with each other to form a storage circuit (S),
wherein the geothermal heat exchanger arrangement (100) comprises a plurality of storage circuits (S, S'), which each consist of a plurality of heat exchanger screw posts (1, 1') connected in parallel with one another,
wherein the storage circuits (S, S') are serially interconnected and arranged concentrically to each other.

2. Geothermal heat exchanger assembly according to claim 1, wherein each heat exchanger screw post (1) has an outer diameter between 15 and 25 cm.

3. Geothermal heat exchanger assembly according to claim 1 or 2, wherein each supply pipe (6) has a diameter between 1 and 4 cm.

4. Geothermal heat exchanger assembly according to any one of the preceding claims, wherein each base body (2) has a diameter between 8 and 13 cm.

5. Geothermal heat exchanger assembly according to one of the preceding claims, wherein each base body (2) and the threaded element (5) are made of galvanized metal.

6. Geothermal heat exchanger assembly according to one of the preceding claims, wherein inwardly facing, preferably axially extending, ribs (11) are formed on an inner side of each base body (2).

7. Geothermal heat exchanger assembly according to any one of claims 1 to 5, wherein outwardly facing, preferably axially extending, fins (11) are formed on the outer peripheral surface (9) of each insulating layer (7).

8. Geothermal heat exchanger assembly according to any one of the preceding claims, wherein the supply pipe (6) is made of plastic.

9. Geothermal heat exchanger assembly according to any one of the preceding claims, wherein each insulating layer (7) has a heat transfer coefficient between 0.15 and 0.35 W/(m² . K) .

10. Geothermal heat exchanger assembly according to any one of the preceding claims wherein each heat exchanger screw post (1) has a length between 3 and 12 m.

11. Geothermal heat exchanger assembly according to any one of the preceding claims, wherein each heat exchanger screw post (1) is composed of a plurality of elements which are connected, preferably screwed, to each other in the axial direction of the elements.

12. Geothermal heat exchanger assembly according to any one of the preceding claims, wherein the geothermal heat exchanger arrangement (100) comprises a building (G) and wherein the heat exchanger screw posts (1, 1') are arranged below the building (G) in the ground (E).

## Revendications

1. Un assemblage d'échangeur de chaleur géothermique comprenant:
une pluralité de poteaux à vis d'échangeur de chaleur (1, 1') qui sont disposés dans le sol (E), dans lesquels
- un corps de base (2) cylindrique creux avec une cavité (3) et une extrémité fermée, le corps de base (2) étant pourvu sur son côté extérieur (4) d'au moins un élément fileté hélicoïdal (5)
- un tuyau d'écoulement (6) disposé coaxialement avec le corps de base (2) et dans la cavité (3) du corps de base (2), le tuyau d'écoulement (6) ayant un diamètre extérieur et s'étendant sensiblement sur toute une longueur axiale du corps de base (2)
**caractérisé en ce que**
chaque poteau à vis d'échangeur de chaleur (1) comprend en outre :
- une couche isolante continue (7) disposée coaxialement entre le corps de base (2) et le tuyau d'écoulement (6) et présentant un alésage axial (8) avec un diamètre intérieur, le diamètre intérieur de la couche isolante (7) correspondant sensiblement au diamètre extérieur du tuyau d'écoulement (6) et la couche isolante (7) s'étendant sensiblement sur toute la longueur axiale du corps de base (2);
- dans lequel un espace annulaire (10) est formé entre le corps de base (2) et une surface circonférentielle extérieure (9) de la couche isolante (2), lequel espace annulaire (10) est de préférence divisé en une pluralité de canaux (12) par une pluralité de nervures (11) s'étendant axialement,
et **en ce que**
au moins deux poteaux à vis d'échangeur de chaleur (1, 1') sont connectés en parallèle les uns avec les autres pour former un circuit de stockage (S),
l'agencement d'échangeur de chaleur géothermique (100) ayant une pluralité de circuits de stockage (S, S') qui comprennent chacun une pluralité de poteaux à vis d'échangeur de chaleur (1, 1') connectés en parallèle les uns avec les autres,
les circuits de stockage (S, S') étant connectés en série les uns avec les autres et étant disposés concentriquement les uns par rapport aux autres.

2. Assemblage d'échangeur de chaleur géothermique selon la revendication 1, dans lequel chaque poteau à vis d'échangeur de chaleur (1) a un diamètre extérieur compris entre 15 et 25 cm.

3. Assemblage d'échangeur de chaleur géothermique selon la revendication 1 ou 2, dans lequel chaque tuyau d'écoulement (6) a un diamètre compris entre 1 et 4 cm.

4. Assemblage d'échangeur de chaleur géothermique selon l'une quelconque des revendications précédentes, dans lequel chaque corps de base (2) a un diamètre compris entre 8 et 13 cm.

5. Assemblage d'échangeur de chaleur géothermique selon l'une des revendications précédentes, dans lequel chaque corps de base (2) et l'élément fileté (5) sont réalisés en métal galvanisé.

6. Assemblage d'échangeur de chaleur géothermique selon l'une des revendications précédentes, dans lequel des nervures (11) tournées vers l'intérieur, s'étendant de préférence axialement, sont formées sur un côté intérieur de chaque corps de base (2).

7. Assemblage d'échangeur de chaleur géothermique selon l'une quelconque des revendications 1 à 5, dans lequel des ailettes (11) tournées vers l'extérieur, s'étendant de préférence axialement, sont formées sur la surface périphérique extérieure (9) de chaque couche isolante (7).

8. Assemblage d'échangeur de chaleur géothermique selon l'une quelconque des revendications précédentes, dans lequel le tuyau d'écoulement (6) est réalisé en matière plastique.

9. Assemblage d'échangeur de chaleur géothermique selon l'une quelconque des revendications précédentes, dans lequel chaque couche isolante (7) présente un coefficient de transfert thermique compris entre 0,15 et 0,35 W/(m² • K).

10. Assemblage d'échangeur de chaleur géothermique selon l'une quelconque des revendications précédentes, dans lequel chaque poteau à vis d'échangeur de chaleur (1) a une longueur comprise entre 3 et 12 m.

11. Assemblage d'échangeur de chaleur géothermique selon l'une quelconque des revendications précédentes, dans lequel chaque poteau à vis d'échangeur de chaleur (1) est composé d'une pluralité d'éléments qui sont reliés, de préférence vissés, les uns aux autres dans la direction axiale des éléments.

12. Assemblage d'échangeur de chaleur géothermique selon l'une quelconque des revendications précédentes, dans lequel l'assemblage d'échangeur de chaleur géothermique (100) comprend un bâtiment (G) et dans lequel les poteaux à vis d'échangeur de chaleur (1, 1') sont disposés sous le bâtiment (G) dans le sol (E).
